# EUROPÄISCHE PATENTANMELDUNG

(11) **EP 4 517 111 A1**
(43) Veröffentlichungstag der Anmeldung: **05.03.2025**
(21) Anmeldenummer: 23193956.2
(22) Anmeldetag: 29.08.2023
(51) Int. Cl.: F15B 15/19, F16B 19/02, F42B 3/00

(54) **ENTKOPPLUNGSMODUL**

(71) Anmelder: Adient US LLC, Plymouth, MI 48170 (US); Autoliv Development AB, 447 83 Vårgårda (SE)
(72) Erfinder: EHLERS, Jens, 25358 Horst (DE); SÖHNCHEN, Arndt, 22765 Hamburg (DE); WOLF, Christian, 67811 Dielkirchen (DE)
(74) Vertreter: Liedtke & Partner Patentanwälte

(57) **Zusammenfassung**

Die Erfindung betrifft ein Entkopplungsmodul (200, 300, 400, 600) für zwei lösbar miteinander verbundene Bauteile, umfassend zumindest
- ein Modulgehäuse (202, 302, 402, 602) mit einer ersten Kopplungsschnittstelle (202.3) für eines der Bauteile und einem Hohlraum (204, 404),
- eine Arretierungseinheit (206, 306, 408), die einerseits in dem Modulgehäuse (202, 302, 402, 602) axial beweglich gelagert ist und in einem Ausgangszustand zumindest teilweise aus dem Modulgehäuse (202, 302, 402, 602) ragt, um die beiden Bauteile lösbar miteinander zu arretieren, und
- eine Antriebseinheit (208, 308, 408), die andererseits in dem Modulgehäuse (202, 302, 402, 602) ortsfest angeordnet ist,
wobei die Arretierungseinheit (206, 306, 406) und die Antriebseinheit (208, 308, 408) derart zusammenwirkend ausgebildet sind, dass bei Auslösung oder Zündung der Antriebseinheit (208, 308, 408) die Arretierungseinheit (206, 306, 406) schlagartig von einem sich in dem Hohlraum (204, 404) ausbreitenden Druckstoß direkt beaufschlagbar ist oder beaufschlagt wird und sich in das Modulgehäuse (202, 302, 402, 602) hineinbewegt.

## Beschreibung

Die Erfindung betrifft einen Entkopplungsmodul für zwei lösbar miteinander verbundene Bauteile sowie einen Fahrzeugsitz mit einem solchen Entkopplungsmodul.

### Stand der Technik

Aus der der DE 10 2009 033 721 B4 und der DE 10 2011 014 869 A1 sind Befestigungsvorrichtungen zur lösbaren Befestigung eines Elements an einem fahrzeugfesten Bauteil bekannt.

### Aufgabe

Der Erfindung liegt die Aufgabe zu Grunde, ein Entkopplungsmodul der eingangs genannten Art zu verbessern, der insbesondere auch unter Last entkoppelt, sowie einen entsprechenden Fahrzeugsitz mit einem solchen verbesserten Entkopplungsmodul bereitzustellen.

### Lösung

Die erstgenannte Aufgabe wird erfindungsgemäß gelöst durch ein Entkopplungsmodul mit den Merkmalen des Anspruchs 1. Die zweitgenannte Aufgabe wird erfindungsgemäß gelöst durch einen Fahrzeugsitz mit den Merkmalen des Anspruchs 10.

Vorteilhafte Ausgestaltungen, welche einzeln oder in Kombination miteinander eingesetzt werden können, sind Gegenstand der Unteransprüche.

Das erfindungsgemäße Entkopplungsmodul für zwei lösbar miteinander verbundene Bauteile umfasst zumindest ein Modulgehäuse mit einer, insbesondere äußeren ersten, Kopplungsschnittstelle, insbesondere zur Kopplung an eines der Bauteile, und einen Hohlraum, eine Arretierungseinheit, die einerseits in dem Modulgehäuse axial beweglich gelagert ist und in einem Ausgangszustand zumindest teilweise aus dem Modulgehäuse ragt, insbesondere um die beiden Bauteile lösbar miteinander zu arretieren oder zu koppeln, und eine Antriebseinheit, die andererseits in dem Modulgehäuse ortsfest angeordnet ist, wobei die Arretierungseinheit und die Antriebseinheit derart zusammenwirkend ausgebildet sind, dass bei Auslösung oder Zündung der Antriebseinheit die Arretierungseinheit schlagartig von einem sich in dem Hohlraum ausbreitenden oder aufbauenden Druckstoß direkt beaufschlagbar ist oder beaufschlagt wird und sich in das Modulgehäuse hineinbewegt. Die Arretierungseinheit ist axial entlang einer linearen Achse bewegbar und bewegt sich linear in das Modulgehäuse hinein. Mit anderen Worten: Das Entkopplungsmodul ist mit der Arretierungseinheit und der Antriebseinheit, die miteinander zusammenwirken, als eine lineare Arretierungsauslösung, insbesondere eine lineare Bolzenauslösung oder eine lineare Riegelauslösung, ausgebildet.

Der sich ausbreitende Druckstoß oder ein sich aufbauender integraler Druck kann beispielsweise durch ein in den Hohlraum eingeleitetes Gas oder Gasgemisch der Antriebseinheit erzeugt werden. Der Hohlraum wird auch als Gasraum bezeichnet. Dadurch, dass der Druckstoß direkt auf die Arretierungseinheit wirkt, ist ein besonders kompaktes Entkopplungsmodul mit einer hohen Arbeitskraft und einem hohen Arbeitsdruck ermöglicht.

Darüber hinaus können Modulgehäuse, Arretierungseinheit und Antriebseinheit beispielsweise koaxial zueinander angeordnet sein. Vorzugsweise können Modulgehäuse, Arretierungseinheit und Antriebseinheit jeweils koaxial zu deren Längsachsen zueinander orientiert und angeordnet sein. Insbesondere weist das Modulgehäuse einen, insbesondere becherförmigen, Hohlraum auf, in welchem die Arretierungseinheit und die Antriebseinheit zueinander koaxial angeordnet sind. Darüber hinaus können das Modulgehäuse, die Arretierungseinheit und die Antriebseinheit beispielsweise jeweils wenigstens abschnittsweise überlappend und koaxial zueinander angeordnet sein. Die koaxiale Anordnung der Komponenten des Entkopplungsmoduls ermöglichen eine einfache Fertigung und einen einfachen, modularen und besonders kompakten Aufbau des Entkopplungsmoduls.

Die Antriebseinheit kann beispielsweise als eine pyrotechnische Einrichtung ausgebildet sein. Die Antriebseinheit kann insbesondere über ihre Stirnseiten einerseits am Modulgehäuse und andererseits an der Arretierungseinheit abgestützt sein.

Das Entkopplungsmodul, insbesondere das Modulgehäuse, zum Beispiel der Moduldeckel, kann darüber hinaus eine zweite, beispielsweise äußere, Kopplungsschnittstelle aufweisen.

Die erste Kopplungsschnittstelle des Modulgehäuses kann beispielsweise als ein Außengewinde ausgebildet sein. Die zweite Kopplungsschnittstelle des Modulgehäuses kann beispielsweise als eine Mutter, insbesondere ein Sechskantprofil oder eine Sechskantmutter, ausgebildet sein. Dadurch kann das Entkopplungsmodul in einfacher Art und Weise an einem der beiden zu verbindenden Bauteile werkzeuglos bei nur einer Kopplungsschnittstelle oder mit einem Schraubenschlüssel bei zwei Kopplungsschnittstellen befestigt werden.

Beispielsweise kann ein axiales Ende der Antriebseinheit als ein Moduldeckel ausgebildet sein, der in einem zusammengebauten Zustand des Entkopplungsmoduls mit dem Modulgehäuse formschlüssig und/oder kraftschlüssig verbunden ist. Beispielsweise kann der Moduldeckel mit dem Modulgehäuse verkrimpt, verschraubt oder dergleichen sein.

Beispielsweise können das Modulgehäuse und die Antriebseinheit derart miteinander verbunden sein, dass diese im zusammengebauten Zustand gasdicht nach außen abgedichtet sind. Das Modulgehäuse kann insbesondere nach außen derart gasdicht abgeschlossen sein, dass bei ausgelöster Antriebseinheit die Arretierungseinheit zumindest zeitweise in der eingezogenen Stellung gehalten wird oder gehalten ist. Alternativ kann die Arretierungseinheit in eingezogener Stellung arretierbar ausgebildet sein.

Darüber hinaus kann der Moduldeckel teilweise überlappend mit dem Modulgehäuse angeordnet sein. Beispielsweise können das Modulgehäuse und der Moduldeckel teleskopisch ineinander gesetzt sein. Beispielsweise kann der Moduldeckel über eine Außenwand des Modulgehäuses teilweise stülpbar sein. Alternativ kann eine Außenwand des Modulgehäuses über den Moduldeckel teilweise stülpbar sein. Eine solche Ausgestaltung ermöglicht eine variable Einstellung des modularen Gehäuses des Entkopplungsmoduls und somit unterschiedliche Modulgrößen und Modulabmessungen.

Die Arretierungseinheit kann beispielsweise einen Arretierungsabschnitt und einen Druckeinwirkungsabschnitt umfassen, der bei Auslösung oder Zündung der Antriebseinheit mit dem Druckstoß beaufschlagbar ist, so dass sich die Arretierungseinheit beschleunigt in das Modulgehäuse hineinbewegt und die beiden Bauteile voneinander entkoppelt. Der Ort der Krafteinwirkung auf die Arretierungseinheit kann variabel insbesondere in Bezug auf geometrische Gestalt, Ausrichtung und Anordnung der Arretierungseinheit relativ zur Antriebseinheit ausgebildet sein und von diesen Parametern beeinflusst werden.

Der Druckeinwirkungsabschnitt kann beispielsweise als eine zylindrische Hohlkammer oder becherförmige Hohlkammer mit mindestens einer Ausnehmung ausgebildet sein. Die mindestens eine Ausnehmung kann beispielsweise als ein Gasdurchlass, eine Durchströmöffnung, eine Überströmöffnung, ein Überströmkanal oder dergleichen ausgebildet sein. Beispielsweise kann der Druckeinwirkungsabschnitt mehrere Ausnehmungen umfassen, die symmetrisch verteilt sind.

Der Arretierungsabschnitt kann beispielsweise als ein Schaftende, ein Riegel, ein Stift oder ein anderes geeignetes Arretierungselement ausgebildet sein. Das Arretierungselement kann in einem verbundenen Zustand der beiden Bauteile mittels eines Kraftspeichers, insbesondere einem Federelement, zum arretierenden Verbinden der beiden Bauteile vorgespannt gelagert sein.

Das Modulgehäuse kann darüber hinaus beispielsweise in einem Gehäuseboden für ein Schaftende der Arretierungseinheit eine Öffnung aufweisen, durch welche das Schaftende in dem verbundenen Zustand zumindest bereichsweise aus dem Modulgehäuse herausragt, um die beiden Bauteile arretiert miteinander zu verbinden oder arretiert miteinander zu halten.

Der erfindungsgemäße Fahrzeugsitz umfasst das zuvor beschriebene Entkopplungsmodul.

Zusammenfassend und mit anderen Worten ausgedrückt ist durch die Erfindung ein achssymmetrisches Entkopplungsmodul bereitgestellt. Das achssymmetrische Entkopplungsmodul weist einerseits die erste als Einschraubgewinde ausgebildete Kopplungsschnittstelle des Modulgehäuses mit einer Öffnung für die als Pin, Stift oder Schaftende ausgebildete Arretierungseinheit und andererseits die zweite, beispielsweise als Sechskant oder Mutter, ausgebildete Kopplungsschnittstelle auf.

Durch ein solches Entkopplungsmodul mit mindestens einer der Kopplungsschnittstellen kann dieses Entkopplungsmodul einfach an einem der Bauteile eingeschraubt werden.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung,
- Fig. 2:: eine Explosionsdarstellung eines erfindungsgemäßen Entkopplungsmoduls gemäß eines ersten Ausführungsbeispiels,
- Fig. 3:: eine perspektivische Darstellung des Entkopplungsmoduls des ersten Ausführungsbeispiels im zusammengebauten Zustand,
- Fig. 4:: eine perspektivische Darstellung des Entkopplungsmoduls des ersten Ausführungsbeispiels im zusammengebauten Zustand,
- Fig. 5:: eine perspektivische Darstellung eines Moduldeckels mit einer vormontierten Antriebseinheit,
- Fig. 6:: eine perspektivische Darstellung einer Arretierungseinheit des Entkopplungsmoduls des ersten Ausführungsbeispiels,
- Fig. 7:: eine Explosionsdarstellung eines erfindungsgemäßen Entkopplungsmoduls gemäß eines zweiten Ausführungsbeispiels,
- Fig. 8:: eine Explosionsdarstellung eines erfindungsgemäßen Entkopplungsmoduls gemäß eines dritten Ausführungsbeispiels,
- Fig. 9:: eine perspektivische Darstellung des Entkopplungsmoduls nach Figur 8 im zusammengebauten Zustand,
- Fig. 10:: schematisch in perspektivischer Darstellung eine mehrteilige Arretierungseinheit im zusammengesetzten Zustand,
- Fig. 11:: schematisch in Schnittdarstellung das Entkopplungsmodul nach Figur 9 vor einem oder bei einem Auslösen einer Antriebseinheit,
- Fig. 12:: schematisch in Schnittdarstellung das Entkopplungsmodul nach Figur 9 nach ausgelöster Antriebseinheit, und
- Fig. 13:: schematisch in perspektivischer Darstellung das Entkopplungsmodul im zusammengebauten Zustand mit einem gecrimpten Modulgehäuse anstelle eines verschraubten Modulgehäuses.

Einander entsprechende Teile sind in allen Figuren mit den gleichen Bezugszeichen versehen.

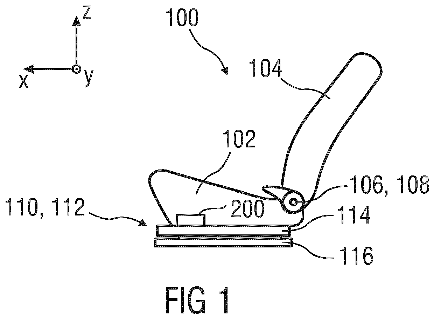

Ein in der Figur 1 schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

Zur schlagartig lösbaren Entkopplung zum Beispiel von Komponenten des Fahrzeugsitzes 100, insbesondere von Bauteilen der Längsverstelleinrichtung 110, in einem Kollisionsfall kann ein Entkopplungsmodul 200 vorgesehen sein.

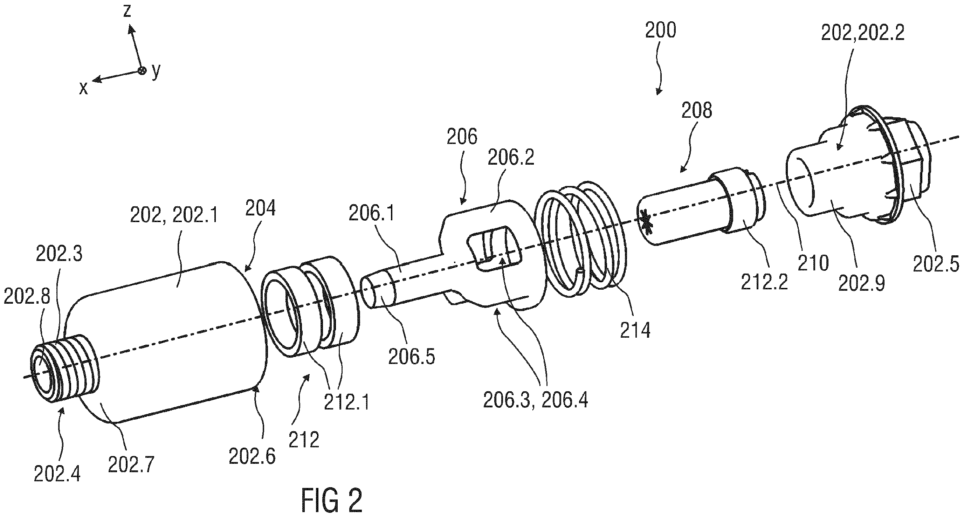

Figur 2 zeigt eine Explosionsdarstellung eines erfindungsgemäßen Entkopplungsmoduls 200 gemäß eines ersten Ausführungsbeispiels.

Das Entkopplungsmodul 200 umfasst zumindest ein Modulgehäuse 202. Das Modulgehäuse 202 ist als ein Hohlkörper ausgebildet. Das Modulgehäuse 202 weist einen Hohlraum 204 auf. Der Hohlraum 204 ist insbesondere hohlzylinderförmig oder becherförmig ausgebildet. Das Modulgehäuse 202 kann modular ausgebildet sein. Das Modulgehäuse 202 kann einen

Modulgrundkörper 202.1 und einen Moduldeckel 202.2 umfassen. Das Modulgehäuse 202 umfasst darüber hinaus eine erste Kopplungsschnittstelle 202.3.

Die erste Kopplungsschnittstelle 202.3 ist als eine äußere Schnittstelle zur Kopplung an eines der beiden Bauteile, die mittels des Entkopplungsmoduls 200 lösbar miteinander arretierbar oder arretiert sind. Die erste Kopplungsschnittstelle 202.3 ist beispielsweise als ein Außengewinde ausgebildet. Die erste Kopplungsschnittstelle 202.3 ist beispielsweise an einem ersten stirnseitigen Ende 202.4 außen als ein Außengewinde ausgebildet. Das Entkopplungsmodul 200 kann so in einfacher Art und Weise in oder an eines der beiden Bauteile geschraubt werden.

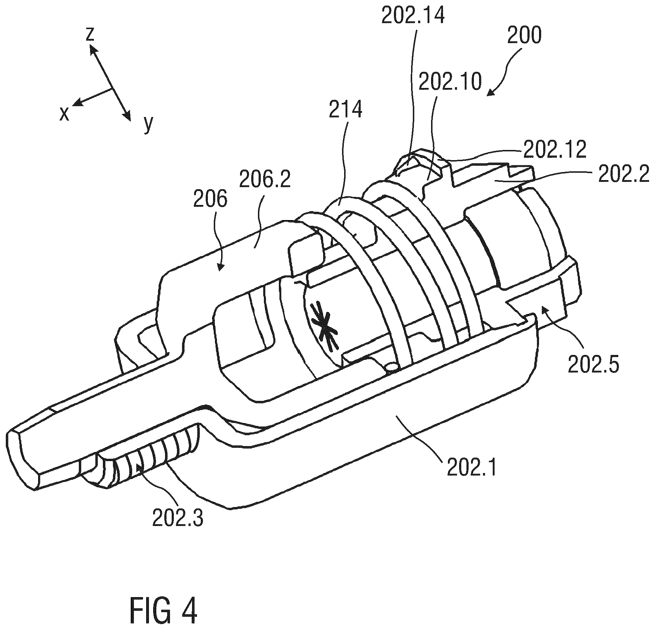

Das Entkopplungsmodul 200 umfasst darüber hinaus eine Arretierungseinheit 206 und eine Antriebseinheit 208. Die Arretierungseinheit 206 ist einerseits in dem Modulgehäuse 202 axial beweglich gelagert. In einem Ausgangszustand ragt die Arretierungseinheit 206 zumindest teilweise aus dem Modulgehäuse 202 heraus, insbesondere um die beiden Bauteile lösbar miteinander zu arretieren oder zu koppeln, wie in Figur 4 gezeigt.

Die Antriebseinheit 208 ist andererseits in dem Modulgehäuse 202 ortsfest angeordnet.

Die Arretierungseinheit 206 und die Antriebseinheit 208 sind derart zusammenwirkend ausgebildet, dass bei Auslösung oder Zündung der Antriebseinheit 208 die Arretierungseinheit 206 schlagartig von einem sich in dem Hohlraum 204 ausbreitenden oder aufbauenden Druckstoß direkt beaufschlagbar ist oder beaufschlagt wird und sich in das Modulgehäuse 202 hineinbewegt.

Die Arretierungseinheit 206 ist axial entlang einer linearen Achse 210 bewegbar und bewegt sich bei Auslösung der Arretierungseinheit 208 linear in das Modulgehäuse 202 hinein. Mit anderen Worten: Das Entkopplungsmodul 200 ist mit der Arretierungseinheit 206 und der Antriebseinheit 208, die miteinander zusammenwirken, als eine lineare Arretierungsauslösung, insbesondere eine lineare Bolzenauslösung oder eine lineare Riegelauslösung, ausgebildet.

Die Antriebseinheit 208 kann beispielsweise als eine pyrotechnische Einrichtung, zum Beispiel ein Gasgenerator mit einem pyrotechnischer Zünder, ausgebildet sein. Die Antriebseinheit 208 kann insbesondere über ihre Stirnseiten einerseits am Modulgehäuse 202, insbesondere an dem Moduldeckel 202.2, und andererseits an der Arretierungseinheit 206 abgestützt sein.

Das Modulgehäuse 202 kann darüber hinaus eine zweite Kopplungsschnittstelle 202.5 ausgebildet sein. Beispielsweise ist die zweite Kopplungsschnittstelle 202.5 eine äußere und zum Beispiel als eine Mutter oder Sechskant ausgebildete Schnittstelle.

Der Moduldeckel 202.2 kann beispielsweise an ein dem ersten stirnseitigen Ende 202.4 gegenüberliegenden zweiten stirnseitigen Ende 202.6 des Modulgrundkörpers 202.1 angeordnet sein und in einem zusammengebauten Zustand des Entkopplungsmoduls 200 mit dem Modulgrundkörper 202.1 formschlüssig und/oder kraftschlüssig verbunden sein. Beispielsweise kann der Moduldeckel 202.2 mit dem Modulgrundkörper 202.1 verkrimpt, verschraubt oder dergleichen sein.

Der Moduldeckel 202.2 kann eine in Richtung des Modulgrundkörpers 202.1 abstehende Aufnahme 202.9 für die Antriebseinheit 208 aufweisen.

Darüber hinaus können das Modulgehäuse 202 und die Antriebseinheit 208 derart miteinander verbunden sein, dass diese im zusammengebauten Zustand gasdicht nach außen abgedichtet sind. Beispielsweise kann mindestens eine Dichtung 212 vorgesehen sein. Die Dichtung 212 umfasst beispielsweise zwei erste Dichtringe 212.1, die zwischen der Arretierungseinheit 206 und dem Modulgehäuse 202 angeordnet sind. Die Dichtung 212 kann beispielsweise zusätzlich oder alternativ als ein zweiter Dichtring 212.2 ausgebildet sein, der außen auf der Antriebseinheit 208 angeordnet ist und den Moduldeckel 202.2 nach außen abdichtet.

Das Modulgehäuse 202 kann insbesondere mittels der Dichtringe 212.1, 212.2 derart nach außen gasdicht abgeschlossen werden oder sein, dass bei ausgelöster Antriebseinheit 208 die Arretierungseinheit 206 zumindest zeitweise in der eingezogenen Stellung gehalten wird oder gehalten ist. Alternativ kann die Arretierungseinheit 206 in eingezogener Stellung arretierbar ausgebildet sein.

Die Arretierungseinheit 206 kann beispielsweise einen Arretierungsabschnitt 206.1 und einen Druckeinwirkungsabschnitt 206.2 umfassen, der bei Auslösung oder Zündung der Antriebseinheit 208 mit dem Druckstoß beaufschlagbar ist, so dass sich die Arretierungseinheit 206 beschleunigt in das Modulgehäuse 202 hineinbewegt und die beiden Bauteile voneinander entkoppelt. Der Ort der Krafteinwirkung auf die Arretierungseinheit 206, insbesondere auf den Druckeinwirkungsabschnitt 206.2, kann variabel insbesondere in Bezug auf geometrische Gestalt, Ausrichtung und Anordnung der Arretierungseinheit 206 relativ zur Antriebseinheit 208 ausgebildet sein und von diesen Parametern beeinflusst werden.

Der Druckeinwirkungsabschnitt 206.2 kann beispielsweise als eine zylindrische Hohlkammer oder becherförmige Hohlkammer mit mindestens einer Ausnehmung 206.3 ausgebildet sein. Die mindestens eine Ausnehmung 206.3 kann beispielsweise als ein Gasdurchlass 206.4 ausgebildet sein. Alternativ kann die Ausnehmung 206.3 als eine Durchströmöffnung, eine Überströmöffnung oder dergleichen ausgebildet sein. Beispielsweise kann der Druckeinwirkungsabschnitt 206.2 mehrere Ausnehmungen 206.3 umfassen, die symmetrisch verteilt sind.

Der Arretierungsabschnitt 206.1 kann beispielsweise als ein Schaftende 206.5 ausgebildet sein. Alternativ kann der Arretierungsabschnitt 206.1 als ein Riegel, ein Stift oder ein anderes geeignetes Arretierungselement ausgebildet sein. Der Arretierungsabschnitt 206.1 kann in einem verbundenen Zustand der beiden Bauteile mittels eines Kraftspeichers 214, insbesondere einem Federelement, insbesondere einer Schraubenfeder, zum arretierenden Verbinden der beiden Bauteile vorgespannt gelagert sein.

Das Modulgehäuse 202 kann darüber hinaus beispielsweise in einem Gehäuseboden 202.7 für ein Schaftende 206.5 der Arretierungseinheit 206, insbesondere für ein bolzenförmiges oder stiftförmiges Schaftende 206.5, eine Öffnung 202.8 aufweisen, durch welche das Schaftende 206.5 in dem verbundenen Zustand zumindest bereichsweise aus dem Modulgehäuse 202 herausragt, um die beiden Bauteile arretiert miteinander zu verbinden oder arretiert miteinander zu halten.

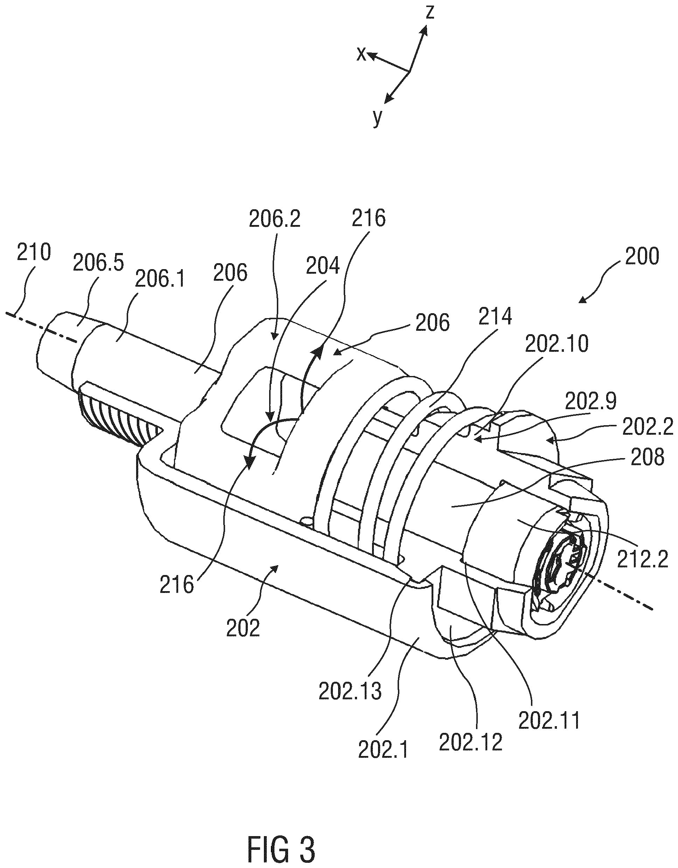

Figur 3 zeigt eine perspektivische und teilweise aufgeschnittene Darstellung des Entkopplungsmoduls 200 des ersten Ausführungsbeispiels im zusammengebauten Zustand.

Der Moduldeckel 202.2 kann teilweise überlappend mit dem Modulgrundkörper 202.1 angeordnet sein. Beispielsweise können der Modulgrundkörper 202.1 und der Moduldeckel 202.2 teleskopisch ineinander gesetzt sein. Beispielsweise kann eine Außenwand des Modulgrundkörpers 202.1 über den Moduldeckel 202.2 teilweise stülpbar sein.

Die Aufnahme 202.9 des Moduldeckels 202.2 ist innenseitig korrespondierend zu einer Außenform und/oder Außenabmessungen der Antriebseinheit 208 ausgebildet. Außenseitig ist die Aufnahme 202.9 derart ausgebildet, dass sich der Kraftspeicher 214 abstützen kann. Beispielsweise weist die Aufnahme 202.9 an der Außenseite mindestens einen Absatz 202.10 auf. Innenseitig kann die Aufnahme 202.9 eine Nut 202.11 für den zweiten Dichtring 212.2 aufweisen. Zusätzlich kann der Moduldeckel 202.2 einen Befestigungsflansch 202.12 aufweisen, der in einer Befestigungsnut 202.13 des Modulgrundkörpers 202.1 formschlüssig und/oder kraftschlüssig angeordnet ist.

Bei Zündung der Antriebseinheit 208 erzeugt diese einen Druckstoß oder einen integralen Druck durch ein in den Hohlraum 204 eingeleitetes Gas 216 oder Gasgemisch. Der Hohlraum 204 wird auch als Gasraum bezeichnet. Dabei wird der Druckeinwirkungsabschnitt 206.2 der Arretierungseinheit 206 mit dem Gas 216 beaufschlagt. Dadurch, dass der Druckstoß direkt auf die Arretierungseinheit 206 wirkt ist ein besonders kompaktes Entkopplungsmodul 200 mit einer hohen Arbeitskraft und einem hohen Arbeitsdruck ermöglicht.

Die Arretierungseinheit 206 bewegt sich infolge des einwirkenden Druckstoßes linear in das Modulgehäuse 202 hinein und bilden eine lineare Bolzenauslösung oder eine lineare Riegelauslösung aus.

Zur Erzielung eines kompakten Aufbaus können das Modulgehäuse 202, die Arretierungseinheit 206 und die Antriebseinheit 208 koaxial zueinander angeordnet sein. Vorzugsweise können Modulgehäuse 202, Arretierungseinheit 206 und Antriebseinheit 208 jeweils koaxial zu deren Längsachsen und der linearen Achse 210 zueinander orientiert und angeordnet sein.

Darüber hinaus können das Modulgehäuse 202, die Arretierungseinheit 206 und die Antriebseinheit 208 beispielsweise jeweils wenigstens abschnittsweise überlappend und koaxial zueinander angeordnet sein.

Figur 4 zeigt eine perspektivische Darstellung des Entkopplungsmoduls 200 des ersten Ausführungsbeispiels im zusammengebauten Zustand.

Der Kraftspeicher 214 stützt sich einerseits an dem Absatz 202.10 des Moduldeckels 202.2 und andererseits an einem stirnseitigen Ende des Druckeinwirkungsabschnitts 206.2 der Arretierungseinheit 206 ab.

Der Befestigungsflansch 202.12 des Moduldeckels 202.2 kann zusätzlich mit einer Verdrehsicherung 202.14 versehen sein. Die Verdrehsicherung 202.14 kann beispielsweise aus mindestens einer radial abstehenden Rippe und einem korrespondierenden Schlitz an einer Innenseite des Modulgrundkörpers 202.1 gebildet sein. Im montierten Zustand greift die Rippe drehfest in den Schlitz ein. Hierdurch kann ein Einschrauben des Entkopplungsmoduls 200 in eines der Bauteile, insbesondere ein Innengewinde, über die erste Kopplungsschnittstelle 202.3, insbesondere ein Außengewinde, mittels eines an der zweiten Kopplungsschnittstelle 202.5, insbesondere einem Sechskant oder einem Mutterelement, eingreifenden Werkzeugs unterstützt werden.

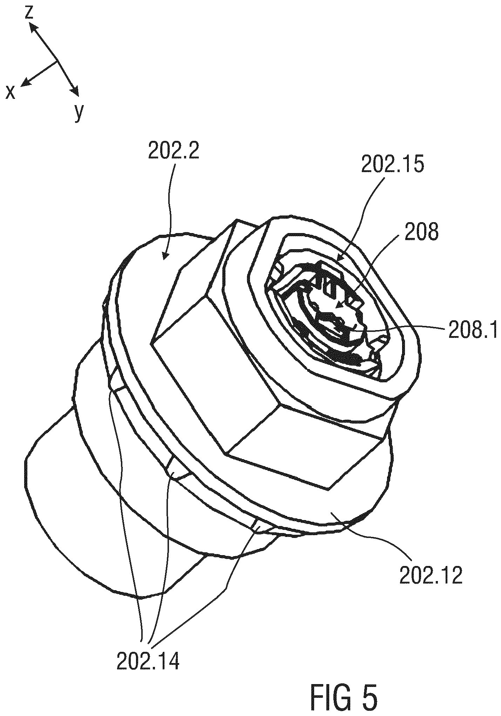

Figur 5 zeigt eine perspektivische Darstellung des Moduldeckels 202.2 mit der Antriebseinheit 208, die zusammen vormontiert sind.

Der Moduldeckel 202.2 weist an seinem stirnseitigen Ende eine Anschlussöffnung 202.15 für die Antriebseinheit 208 auf. In die Anschlussöffnung 202.15 ragt eine Anschlusseinheit 208.1 zum Anschließen von elektrischen Leitungen und/oder Zündleitungen hinein. Die Anschlusseinheit 208.1 ist von außen frei zugänglich in der Anschlussöffnung 202.15 angeordnet.

Die Verdrehsicherung 202.14 kann eine Mehrzahl von Rippen aufweisen, die symmetrisch verteilt unterhalb des Befestigungsflansches 202.12 angeordnet sind.

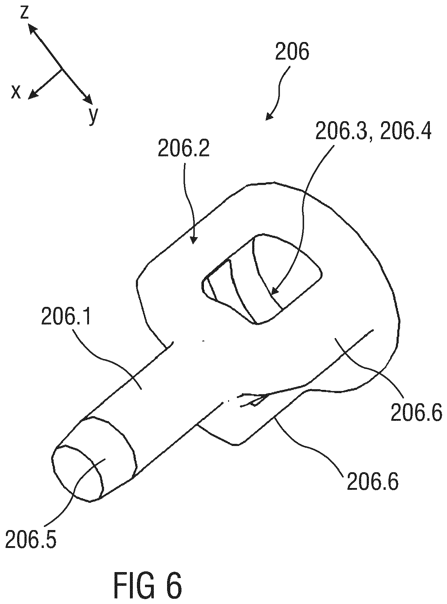

Figur 6 zeigt eine perspektivische Darstellung der Arretierungseinheit 206.

Die Arretierungseinheit 206 weist den Arretierungsabschnitt 206.1 mit den Schaftende 206.5, der die beiden Bauteile miteinander arretierend verbindet (nicht dargestellt), und den Druckeinwirkungsabschnitt 206.2 mit den Ausnehmungen 206.3, die als Gasdurchlass 206.4 ausgebildet sind, auf.

Der Druckeinwirkungsabschnitt 206.2 ist becherförmig ausgebildet und umfasst eine Anzahl von abwechselnd angeordneten Trennstegen 206.6 und Ausnehmungen 206.3.

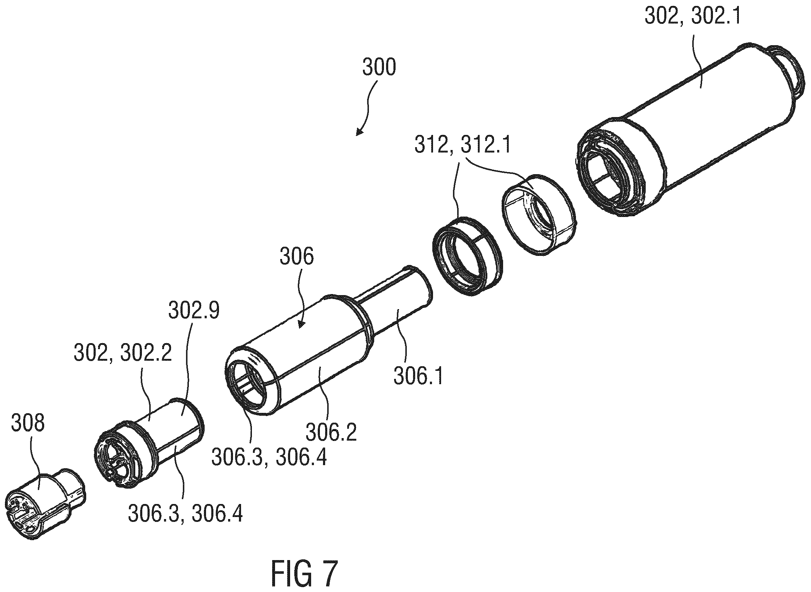

Figur 7 zeigt eine Explosionsdarstellung eines erfindungsgemäßen Entkopplungsmoduls 300 gemäß eines zweiten Ausführungsbeispiels.

Das Entkopplungsmodul 300 unterscheidet sich vom Entkopplungsmodul 200 nur in der Form der Arretierungseinheit 306 und des Modulgehäuses 302. Alle anderen strukturellen Merkmale und Funktionen des Entkopplungsmoduls 300 sind analog zum Entkopplungsmodul 200, wie zuvor beschrieben, ausgeführt.

Anstelle der als Gasdurchlässe 206.4 ausgebildeten Ausnehmungen 206.3 des Entkopplungsmoduls 200 weist das Entkopplungsmodul 300 als Ausnehmungen 306.3 Gaskanäle 306.4 auf. Die Gaskanäle 306.4 können beispielsweise an einer Außenseite der nach innen ragenden Aufnahme 302.9 des Modulgehäuses 302 angeordnet sein. Alternativ oder zusätzlich können Gaskanäle 306.4 an einer Innenseite des hohlzylindrischen Druckeinwirkungsabschnitts 306.2 der Arretierungseinheit 306 ausgebildet sein.

Vom Druckeinwirkungsabschnitt 306.2 ragt der Arretierungsabschnitt 306.1 in Richtung des Modulgrundkörpers 302.1 ab.

Mittels der als Dichtringe 312.1 ausgebildeten Dichtung 312 ist das Entkopplungsmodul 300 nach außen gasdicht abgeschlossen.

Die Antriebseinheit 308 ist in dem Moduldeckel 302.2 in analoger Art und Weise ortsfest, insbesondere formschlüssig und/oder kraftschlüssig, angeordnet und gehalten.

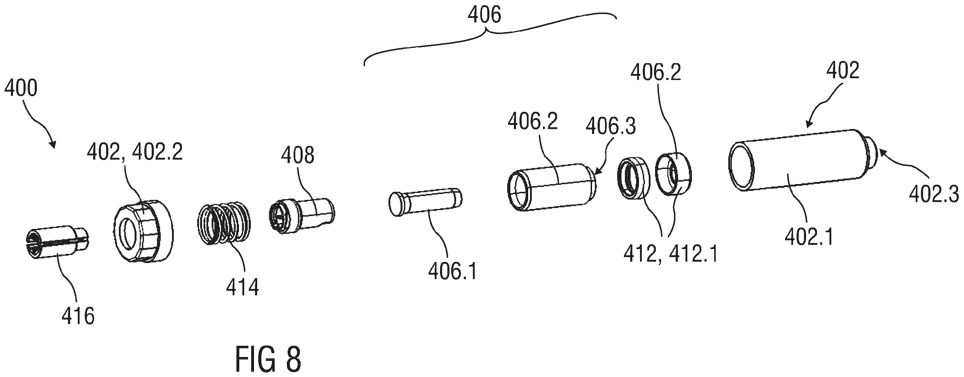

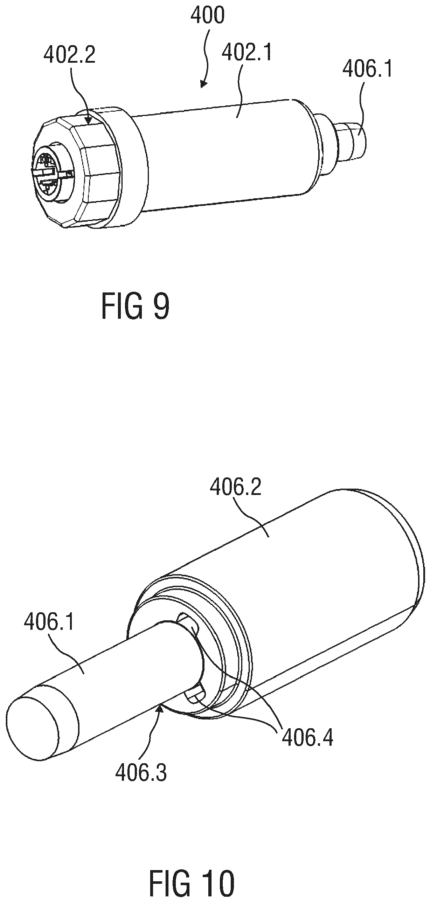

Figur 8 zeigt eine Explosionsdarstellung eines erfindungsgemäßen Entkopplungsmoduls gemäß eines dritten Ausführungsbeispiels und Figur 9 zeigt das Entkopplungsmodul 400 nach Figur 8 im zusammengebauten Zustand.

Das Entkopplungsmodul 400 unterscheidet sich vom Entkopplungsmodul 200 oder 300 nur im Aufbau der Arretierungseinheit 306. Alle anderen strukturellen Merkmale und Funktionen des Entkopplungsmoduls 400 sind analog zum Entkopplungsmodul 200 oder 300, wie zuvor beschrieben, ausgeführt.

Die Arretierungseinheit 406 des Entkopplungsmoduls 400 ist mehrteilig ausgebildet. Die Arretierungseinheit 406 umfasst einen separaten Arretierungsabschnitt 406.1, der als ein separater Pin oder Stift ausgeführt ist. Der Druckeinwirkungsabschnitt 406.2 ist ebenfalls separat ausgebildet. Der Druckeinrichtungsabschnitt 406.2 ist als ein innerer Hohlzylinder oder inneres zylinderförmiges Gehäuse ausgebildet.

Der pinförmige oder stiftförmige Arretierungsabschnitt 406.1 kann in den Druckeinwirkungsabschnitt 406.2 eingesetzt werden. Der Arretierungsabschnitt 406.1 weist eine derartige Form und/oder derartige Abmessungen auf, dass dieser in einem im Druckeinwirkungsabschnitt 406.2 eingesetzten Zustand durch eine Öffnung 406.3 hindurchragt und in Richtung des Modulgrundkörpers 402.1 des Modulgehäuses 402 ragt und durch eine mit der Öffnung 406.3 fluchtende Gehäuseöffnung 402.3 hindurchragt und von dem Modulgrundkörper 402.1 nach außen abragt.

Der Modulgrundkörper 402.1 ist ein Hohlzylinder und bildet einen äußeren Abschnitt des Modulgehäuses 402. Der Modulgrundkörper 402.1 kann auf der zur Gehäuseöffnung 402.3 gegenüberliegenden Seite mit dem Moduldeckel 402.2 verschlossen werden.

Zur Abdichtung des Modulgehäuses 402 sind zwei als Dichtringe 412.1 ausgebildete Dichtungen 412 vorgesehen. Mittels der als Dichtringe 412.1 ausgebildeten Dichtung 412 ist das Entkopplungsmodul 400 nach außen gasdicht abgeschlossen.

Die Antriebseinheit 408 ist in dem Moduldeckel 402.2 in analoger Art und Weise ortsfest, insbesondere formschlüssig und/oder kraftschlüssig, angeordnet und gehalten.

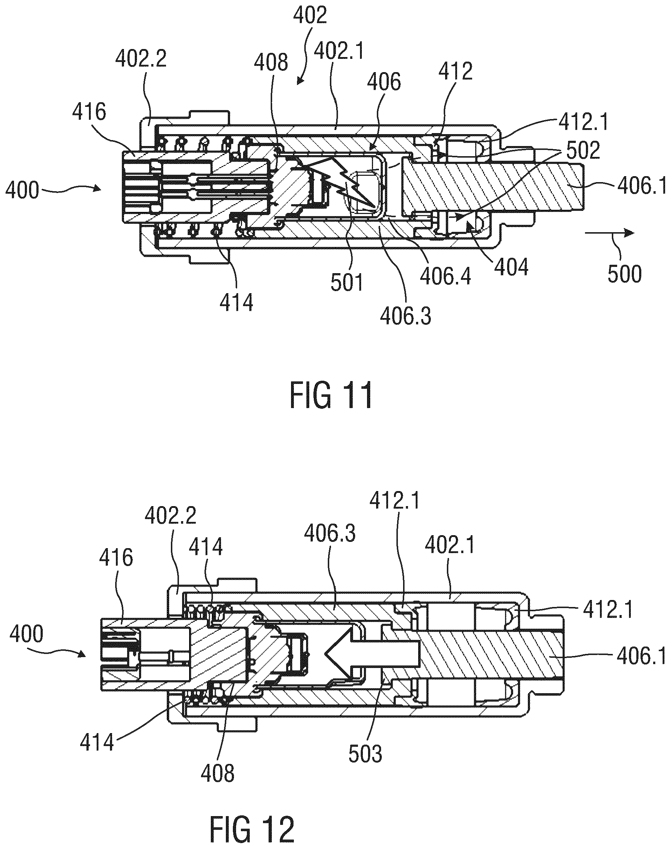

Der Arretierungsabschnitt 406.1 kann in einem verbundenen Zustand der beiden Bauteile mittels eines Kraftspeichers 414, insbesondere einem Federelement, insbesondere einer Schraubenfeder, zum arretierenden Verbinden der beiden Bauteile vorgespannt im Modulgrundkörper 402.1 gelagert sein, wie in Figuren 11 und 12 gezeigt.

Das Entkopplungsmodul 400 kann darüber hinaus zum Beispiel ein längliches Anschlusselement 416 umfassen. Das Anschlusselement 416 ist als Schnittstelle oder Adapter ausgebildet, zum Anschließen von Leitungen oder Kabeln an die Antriebseinheit 408.

Figur 9 zeigt eine perspektivische Darstellung des Entkopplungsmoduls 400 nach Figur 8 im zusammengebauten Zustand mit dem äußeren Moduldeckel 402.2, dem äußeren Modulgrundkörper 402.1 und dem aus diesem herausragenden stiftförmigen oder pinförmigen Arretierungsabschnitt 406.1 der Arretierungseinheit 406.

Figur 10 zeigt schematisch in perspektivischer Darstellung die mehrteilige Arretierungseinheit 406 im zusammengesetzten Zustand. Die mehrteilige Arretierungseinheit 406 umfasst den stiftförmigen oder pinförmigen Arretierungsabschnitt 406.1 und den zylinderförmigen Druckeinwirkungsabschnitt 406.2. Der Druckeinwirkungsabschnitt 406.2 umfasst anstelle der als Gasdurchlässe 206.4 ausgebildeten Ausnehmungen 206.3 des Entkopplungsmoduls 200 nach Figur 2 als Ausnehmungen ausgebildete Gaskanäle 406.4 in analoger Art und Weise zu den Gaskanälen 306.4 des Entkopplungsmoduls 300 nach Figur 7. Die Gaskanäle 406.4 können beispielsweise an einer Innenseite des hohlzylindrischen Druckeinwirkungsabschnitts 406.2 der Arretierungseinheit 406 ausgebildet sein.

Figur 11 zeigt schematisch in Schnittdarstellung das Entkopplungsmodul 400 nach Figur 9 vor einem oder bei einem Auslösen der Antriebseinheit 408. Der Kraftspeicher 414 ist im entspannten Zustand oder teilweise entspannten Zustand und hält oder drückt die Arretierungseinheit 406 in Arretierungsrichtung 500 gegen die Dichtung 412 im Modulgehäuse 402.

Bei Auslösung 501 der Antriebseinheit 408 wird ein Druckstoß gegen den Arretierungsabschnitt 406.1 durch ein gemäß Pfeile 502 durch die Gaskanäle 406.4 in den Hohlraum 404, insbesondere in den nach außen mittels der Dichtringe 412.1 abgedichteten Hohlraum 404, eingeleitetes Gas oder Gasgemisch erzeugt. Der Druckeinwirkungsabschnitt 406.2 ist in Richtung des Hohlraums 404 mit den Gaskanälen 406.4 versehen, die in Figur 10 dargestellt sind.

Dadurch, dass der Druckstoß direkt auf die Arretierungseinheit 406 wirkt, wird der Druckeinwirkungsabschnitt 406.2 zusammen mit dem fest verbundenen Arretierungsabschnitt 406.1 in das Entkopplungsmodul 400 gemäß Entriegelungsrichtung 503 hineinbewegt, wie dies in Figur 12 gezeigt ist.

Figur 12 zeigt schematisch in Schnittdarstellung das Entkopplungsmodul 400 nach Figur 9 und 10 nach ausgelöster Antriebseinheit 408 und im entriegelten Zustand.

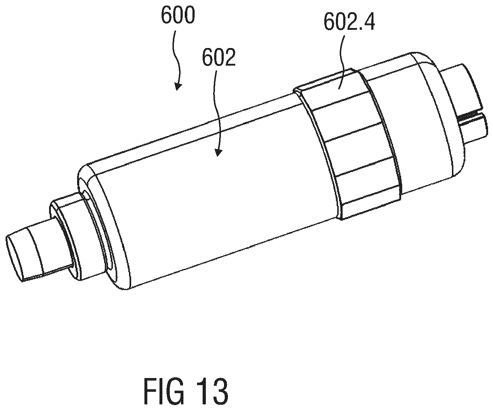

Figur 13 zeigt schematisch in perspektivischer Darstellung ein weiteres Entkopplungsmodul 600 im zusammengebauten Zustand mit einem gecrimpten Modulgehäuse 602. Alle zuvor beschriebenen verschraubten Modulgehäuse 202, 302 und 402 können anstelle des jeweiligen Moduldeckels 202.2, 302.2 und 402.2, der mit dem zugehörigen Modulgrundkörper 202.1, 302.1 und 402.1 verschraubbar oder verschraubt ist, ein vercrimptes oder vercrimpbares Modulgehäuse 202, 302 beziehungsweise 402 aufweisen.

Dazu kann das jeweilige Modulgehäuse 202, 302 und 402 analog zum Modulgehäuse 602 nach Figur 13 ausgebildet sein. Das Modulgehäuse 602 ist derart eingerichtet, dass es mittels eines Crimpbandes 602.4 plastisch verformt, insbesondere gequetscht, gebördelt oder gefalzt, und nach außen dicht verschließbar ist.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)

- 200: Entkopplungsmodul
- 202: Modulgehäuse
- 202.1: Modulgrundkörper
- 202.2: Moduldeckel
- 202.3: erste Kopplungsschnittstelle
- 202.4: erstes stirnseitiges Ende
- 202.5: zweite Kopplungsschnittstelle
- 202.6: zweites stirnseitiges Ende
- 202.7: Gehäuseboden
- 202.8: Öffnung
- 202.9: Aufnahme
- 202.10: Absatz
- 202.11: Nut
- 202.12: Befestigungsflansch
- 202.13: Befestigungsnut
- 202.14: Verdrehsicherung
- 202.15: Anschlussöffnung
- 204: Hohlraum
- 206: Arretierungseinheit
- 206.1: Arretierungsabschnitt
- 206.2: Druckeinwirkungsabschnitt
- 206.3: Ausnehmung
- 206.4: Gasdurchlass
- 206.5: Schaftende
- 206.6: Trennsteg
- 208: Antriebseinheit
- 208.1: Anschlusseinheit
- 210: lineare Achse
- 212: Dichtung
- 212.1: erster Dichtring
- 212.2: zweiter Dichtring
- 214: Kraftspeicher
- 216: Gas

- 300: Entkopplungsmodul
- 302: Modulgehäuse
- 302.1: Modulgrundkörper
- 302.2: Moduldeckel
- 302.9: Aufnahme
- 306: Arretierungseinheit
- 306.1: Arretierungsabschnitt
- 306.2: Druckeinwirkungsabschnitt
- 306.3: Ausnehmung
- 306.4: Gaskanal
- 308: Antriebseinheit
- 312: Dichtung
- 312.1: Dichtring
- 400: Entkopplungsmodul
- 402: Modulgehäuse
- 402.1: Modulgrundkörper
- 402.2: Moduldeckel
- 402.3: Gehäuseöffnung
- 404: Hohlraum
- 406: Arretierungseinheit
- 406.1: Arretierungsabschnitt
- 406.2: Druckeinwirkungsabschnitt
- 406.3: Öffnung
- 406.4: Gaskanal

- 408: Antriebseinheit
- 412: Dichtung
- 412.1: Dichtringe
- 414: Kraftspeicher
- 416: Anschlusselement

- 500: Arretierungsrichtung
- 501: Auslösung
- 502: Pfeil
- 503: Entriegelungsrichtung

- 600: Entkopplungsmodul
- 602: Modulgehäuse
- 602.4: Crimpband

- x: Längsrichtung
- y: Querrichtung
- z: Vertikalrichtung

## Patentansprüche

1. Entkopplungsmodul (200, 300, 400, 600) für zwei lösbar miteinander verbundene Bauteile, umfassend zumindest
- ein Modulgehäuse (202, 302, 402, 602) mit einer ersten Kopplungsschnittstelle (202.3) für eines der Bauteile und einem Hohlraum (204, 404),
- eine Arretierungseinheit (206, 306, 406), die einerseits in dem Modulgehäuse (202, 302, 402, 602) axial beweglich gelagert ist und in einem Ausgangszustand zumindest teilweise aus dem Modulgehäuse (202, 302, 402, 602) ragt, um die beiden Bauteile lösbar miteinander zu arretieren, und
- eine Antriebseinheit (208, 308, 408), die andererseits in dem Modulgehäuse (202, 302, 402, 602) ortsfest angeordnet ist,
wobei die Arretierungseinheit (206, 306, 406) und die Antriebseinheit (208, 308, 408) derart zusammenwirkend ausgebildet sind, dass bei Auslösung oder Zündung der Antriebseinheit (208, 308, 408) die Arretierungseinheit (206, 306, 406) schlagartig von einem sich in dem Hohlraum (204, 404) ausbreitenden Druckstoß direkt beaufschlagbar ist oder beaufschlagt wird und sich in das Modulgehäuse (202, 302, 402, 602) hineinbewegt.

2. Entkopplungsmodul (200, 300, 400, 600) nach Anspruch 1,
wobei das Modulgehäuse (202, 302, 402, 602), die Antriebseinheit (208, 308, 408) und die Arretierungseinheit (206, 306, 406) koaxial zueinander angeordnet sind.

3. Entkopplungsmodul (200, 300, 400, 600) nach Anspruch 1 oder 2, wobei die erste Kopplungsschnittstelle (202.3) als ein Außengewinde ausgebildet ist.

4. Entkopplungsmodul (200, 300, 400, 600) nach einem der vorhergehenden Ansprüche,
wobei ein Moduldeckel (202.2, 302.2. 402.2) vorgesehen ist, der in einem zusammengebauten Zustand des Entkopplungsmoduls (200, 300, 400, 600) mit dem Modulgehäuse (202, 302, 402, 602) formschlüssig und/oder kraftschlüssig verbunden ist.

5. Entkopplungsmodul (200, 300, 400, 600) nach einem der vorhergehenden Ansprüche
wobei die Arretierungseinheit (206, 306, 406) einen Arretierungsabschnitt (206.1, 306.1, 406.1) und einen Druckeinwirkungsabschnitt (206.2, 306.2, 406.2) umfasst, der bei Auslösung oder Zündung der Antriebseinheit (208, 308, 408) mit dem Druckstoß beaufschlagbar ist, so dass sich die Arretierungseinheit (206, 306, 406) beschleunigt in das Modulgehäuse (202, 302, 402, 602) hineinbewegt und dass die Arretierungseinheit (206, 306, 406) die beiden Bauteile voneinander entkoppelt.

6. Entkopplungsmodul (200, 300, 400, 600) nach Anspruch 5,
wobei der Druckeinwirkungsabschnitt (206.2, 306.2, 406.2) als eine zylindrische Hohlkammer oder becherförmige Hohlkammer mit mindestens einer Ausnehmung (206.4, 306.4) ausgebildet ist.

7. Entkopplungsmodul (200, 300, 400, 600) nach Anspruch 5 oder 6, wobei der Arretierungsabschnitt (206.1, 306.1, 406.1) als ein Schaftende (206.5), ein Riegel, ein Stift oder ein anderes geeignetes Arretierungselement ausgebildet ist.

8. Entkopplungsmodul (200, 300, 400, 600) nach einem der vorhergehenden Ansprüche
wobei das Arretierungselement (206, 306, 406) in einem verbundenen Zustand der beiden Bauteile mittels eines Kraftspeichers (214) zum arretierenden Verbinden der beiden Bauteile vorgespannt gelagert ist.

9. Entkopplungsmodul (200, 300, 400, 600) nach einem der vorhergehenden Ansprüche,
wobei das Modulgehäuse (202, 302, 402, 602) in einem Gehäuseboden (202.7) für ein Schaftende der Arretierungseinheit (206, 306, 406) eine Öffnung (202.8) aufweist, durch welche das Schaftende in dem verbundenen Zustand zumindest bereichsweise aus dem Modulgehäuse (202, 302, 402, 602) herausragt, um die beiden Bauteile arretiert miteinander zu verbinden.

10. Fahrzeugsitz (100) mit einem Entkopplungsmodul (200, 300, 400, 600) nach einem der vorhergehenden Ansprüche.
